# EUROPEAN PATENT SPECIFICATION

(11) **EP 1 476 324 B1**
(45) Date of publication and mention of the grant of the patent: **01.09.2010**
(21) Application number: 02703843.9
(22) Date of filing: 11.02.2002
(51) Int. Cl.: B60P 1/28

(54) **DUMP BODY FOR HEAVY VEHICLES**
KIPPERAUFBAU FÜR SCHWERFAHRZEUGE
BENNE POUR VEHICULES LOURDS

(43) Date of publication of application: 17.11.2004
(73) Proprietor: Officine Cardi S.p.A., 37139 Verona (IT)
(72) Inventor: PERINA, Tullio, I-37020 Negrar (IT)
(74) Representative: Petraz, Gilberto Luigi
(86) International application number: PCT/IT2002/000082
(87) International publication number: WO 2003/068559

(56) References cited:
- EP-A- 0 749 870
- DE-U- 29 909 464
- FR-A- 2 814 995
- US-A- 1 627 336
- US-A- 5 454 620
- US-A- 5 460 431

## Description

### TECHNICAL FIELD

This invention concerns a dump body for vehicles designed for the transport of heavy materials of various kinds, for example inert earth material.

More in particular, this invention refers to a metal dump body, with a structure that can transport and unload at the rear of the truck considerable quantities of material, for example inert material such as clay, mud and earth in general.

### BACKGROUND ART

The use of dump bodies installed on trucks designed for the transport of inert materials is known in the art.

A dump body normally consists of a monobloc body, generally comprising a series of metal plates welded together, and is fixed to the frame of a heavy vehicle.

The frame is hinged to the dump body near the rear part of the truck while near the cab the dump body can be raised by means of an appropriate linear actuator which is powered by the oleopneumatic circuit of the truck itself.

The body consists of a base surmounted by a front wall, close to the cab, and two fixed longitudinal sides, remaining fully accessible from above for the loading of the material to be transported.

The longitudinal end of the dump body at the rear of the truck is generally closed by a swing flap, which can be restrained to the frame of the body, for unloading the material.

The dump body is raised by the linear actuator and the consequent inclination of the body towards the tail of the truck causes the material to slide down towards the swing flap and exit from the body.

According to other known embodiments, one of the body sides can be a swing flap and the dump body can be hinged to the truck bed close to said side.

In this case the body is raised by a linear actuator close to the opposite side so that the material is unloaded from the side of the truck.

This condition only concerns dump bodies designed for the transport of medium-low quantities of material; in fact, since the sides have greater overall dimensions with respect to rear end of the dump body, the side unloading of considerable quantities of material would lead to recoil and instability of the truck.

Some types of dump bodies currently in use present bodies with flat internal walls with a generally U-shaped cross-section, with the sides substantially perpendicular to the base and connected to it at right angle; this often leads to adherence of the material, especially if it is soaked with liquid, and the consequent difficulty in unloading the said inert material.

In fact, the strong pressure exercised by the material at the top on the material at the bottom of the dump body causes layers of mud to stick to the sides and bottom, particularly in the area where the sides are joined to the base.

If this adhesion of inert material occurs close to the swing flap, unloading becomes a particularly difficult operation, sometimes requiring manual intervention as well as the continual banging of the dump body.

With the aim of solving this problem and facilitating the detachment of the inert material, dump bodies have been designed with shaped internal walls, in which the sides and the base are joined by a curved line; this results in a dump body with a tendentially semicircular cross-section or, in any case, in a narrower base since it is joined to the sides along a curved line.

However, a dump body with a tendentially semicircular cross-section considerably limits the capacity of the dump body compared to the version with sides perpendicular to the base and forming a parallelepiped cross-section.

It has been proposed by the DE-U-29 909 464 , which represents the most relevant prior art, to use several triangular planar plates to form lateral faces of the dump body and weld them along their longitudinal edges in order to achieve a cross section of the dump body which starts from a substantially semicircular and ends with a rectangular cross section. However this solution presents the disadvantages of having to cut several different triangular planar plates and weld them together, which rises production costs, leave the surface of the dump body not smooth enough for the easy detachment of the inert material and reduce the total capacity of the dump body.

US-A-5 460 431 discloses a double tapered trailer fpr a dumping vehicle, the bottom flood at the re4ar being wider than at the front.

US-A-5 454 620 describes a dump body having a substantially semicircular cross section.

### DESCRIPTION OF THE INVENTION

This invention aims to provide a highly efficient dump body capable of eliminating or significantly reducing the drawbacks mentioned above.

This invention also aims to provide a dump body that can be fitted to any truck designed for the transport of materials of various kinds, for example inert materials such as clay, mud or earth in general.

A further aim of this invention is to provide a dump body with an innovative design that can be produced at a cost comparable to that of currently produced dump bodies.

This is achieved by means of a dump body for vehicles designed for the transport of heavy materials of various kinds, with the features described in independent claim 1.

The dependent claims described advantageous embodiments of the invention.

The front wall of the dump body, adjacent to the truck driver's cab, preferably presents a polygonal configuration, corresponding to that of the cross-section of the dump body, reinforced by stiffening.ribs.

Preferably, the casing consists of a number of longitudinal metal parts welded together to form a single body; this material can for example be high tensile steel, for example steel of the type marketed with the initials HD400 and/or HD500, or aluminium.

The configuration of the casing presenting a polygonal cross-section presents a smaller flat bottom surface for the deposit of the material; in this way the inert material is subjected to limited compacting, preventing its adhesion to the base of the dump body.

The volume of the casing increases towards the rear swing flap, so that if the material adheres to the bottom of the dump body in the part with the greatest capacity, this material is dragged out through the rear flap by the material which is moved thanks to the inclination of the dump body achieved by the raising of the same by means of the actuator.

The particular configuration of the casing combines the advantages deriving from the faceting of the internal walls, which prevents adhesion of the material, particularly if the material is damp or wet earth, with those achieved through the use of traditional types of dump bodies with a U-shaped cross-section, thus providing notable dump body volume for the transport of considerable quantities of material.

### DESCRIPTION OF THE DRAWINGS

Other features and advantages of the invention will become evident on reading the following description of one embodiment of the invention, given as a non-binding example, with the help of the enclosed drawings, in which:
- figure 1 is a prospective schematic view of a basic geometric design form of the dump body according to the invention, in which the front section consists of a 3-segment polygonal line;
- figure 2 is a view similar to figure 1, in which the front section consists of a 7-segment polygonal line;
- figure 3 is a prospective view slightly from above of a dump body according to the invention;
- figure 4 shows a side elevation view of the dump body according to figure 3;
- figure 5 represents a view from underneath of the dump body according to figures 3 and 4; and
- figure 6 represents a partially sectional front view according to figures 3 to 5.

### DESCRIPTION OF ONE EMBODIMENT

In the figures, number 10 indicates a dump body in general, in the case in question a dump body for heavy vehicles which comprises:
- a casing comprising a bed or base 12 surmounted by a front wall 13 and two fixed sides 14a, 14b;
- a stiffening structure, integral with and surrounding the casing, which can be hinged to a heavy vehicle near a pin fitted in correspondence with the rear part of the vehicle itself, the casing thus being mounted to rotate around said pin thanks to the operation of an appropriate linear actuator;
- a rear swing flap 16 restrained to the structure.
   The structure comprises a pair of support sections 17a, 17b, which lie above the bed of the vehicle, and a pair of side sections 18 integral with the sections 17 near the swing flap 16.

Said side sections 18 may have stiffening ribs (not shown in the drawings) in order to reinforce the rear part of the dump body, which is normally the part most subject to stress.

The side sections 18 are relatively wide and are designed to connect the support sections 17 to the upper sections 19 which border the upper edges of the casing.

As can be seen from the figures, in correspondence with the front wall 13, which is concave towards the upper loading portion of the dump body 10, the casing presents a cross-section in the form of a broken polygonal line.

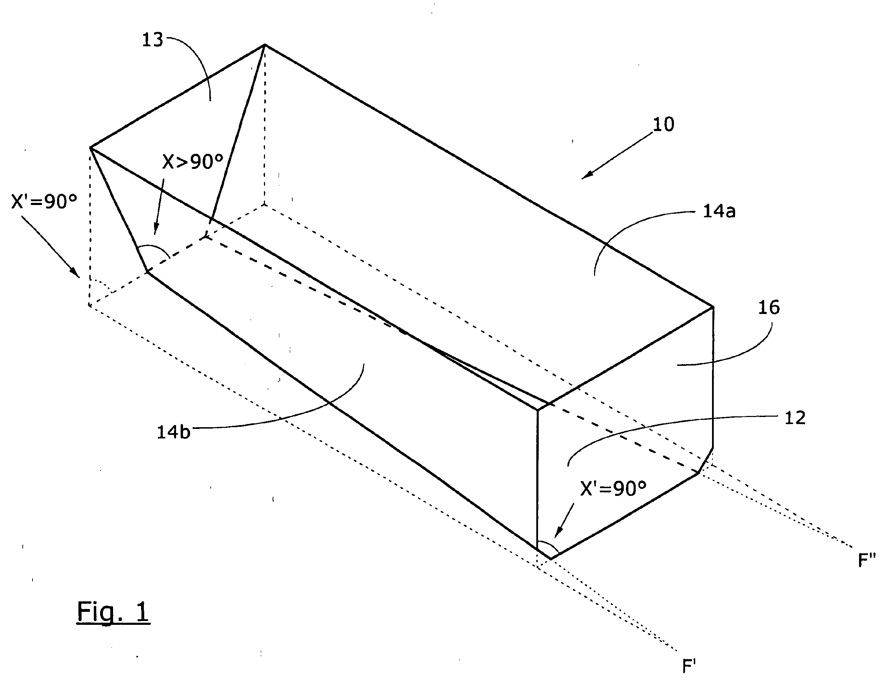

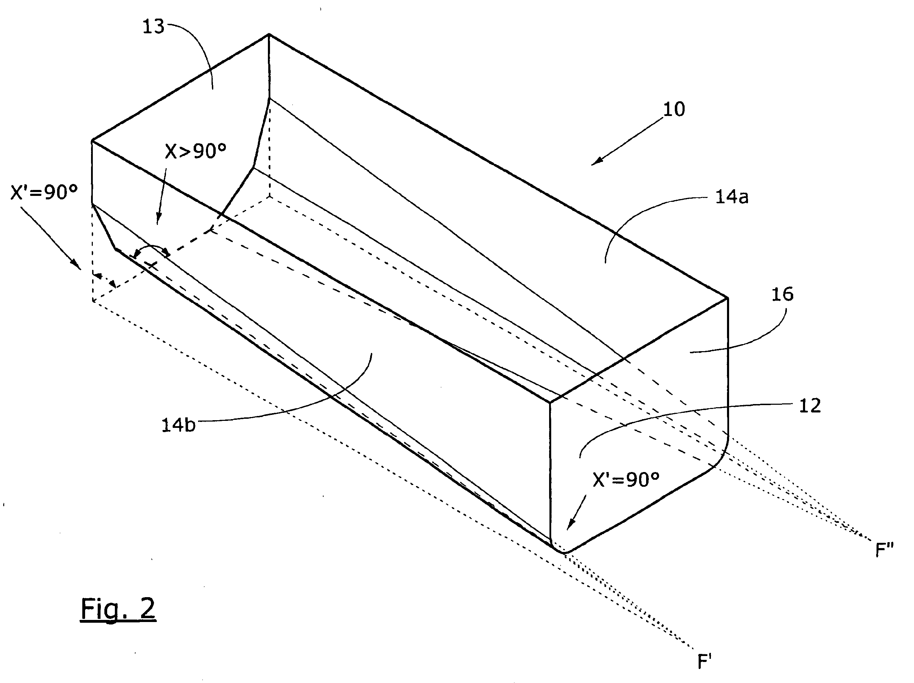

As illustrated in figures 1 and 2, which show the basic lines forming the casing of the dump body 10, this broken polygonal line comprises at least three segments joined together at an angle greater than 90°, and said cross-section widens gradually from said front wall 13 towards the rear part 16 of the dump body, to form a substantially U-shaped cross-section at the rear end, with the sides 14a, 14b forming an angle of around 90° with respect to the base 12.

Figures 1 and 2 show two possible embodiments of the casing. It is, nevertheless, clear that the broken polygonal starting line can consist of any number of segments.

As can also be seen in figures 1 and 2, the vertices at which adjacent segments of the broken polygonal line are joined together constitute the respective starting points for a series of fold lines of the sides and the base of the dump body.

In accordance with a particularly advantageous embodiment of the invention, the aforementioned fold lines converge, on one side and the other with respect to the longitudinal axis defined by the base 12 of the dump body, on a respective pair of theoretical vanishing points F', F", geometrically arranged on the same plane at a predetermined finite distance with respect to the rear end of the dump body 10.

Experiments carried out by the applicant were able to ascertain that, surprisingly, this configuration makes it possible to achieve the best results in terms of unloading capacity in relation to the volume of the dump body.

The front wall 13 has a series of external stiffening ribs 20, also used to fix and guide the linear actuator (not shown) designed to raise the dump body 10, and each segment of the broken polygonal line configuration is connected to a respective face 22 of the fixed side 14.

As described previously with reference to the theoretical embodiments as per figures 1 and 2, the edges 23 of each face 22 converge on a single respective common vanishing point F', F", beyond the rear swing flap 16 of the dump body 10.

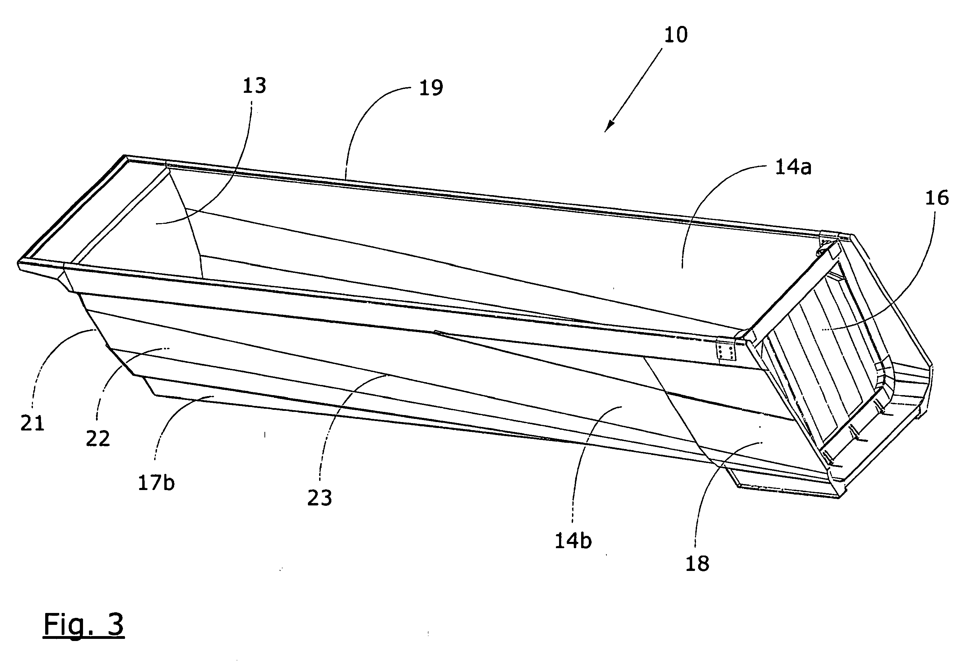

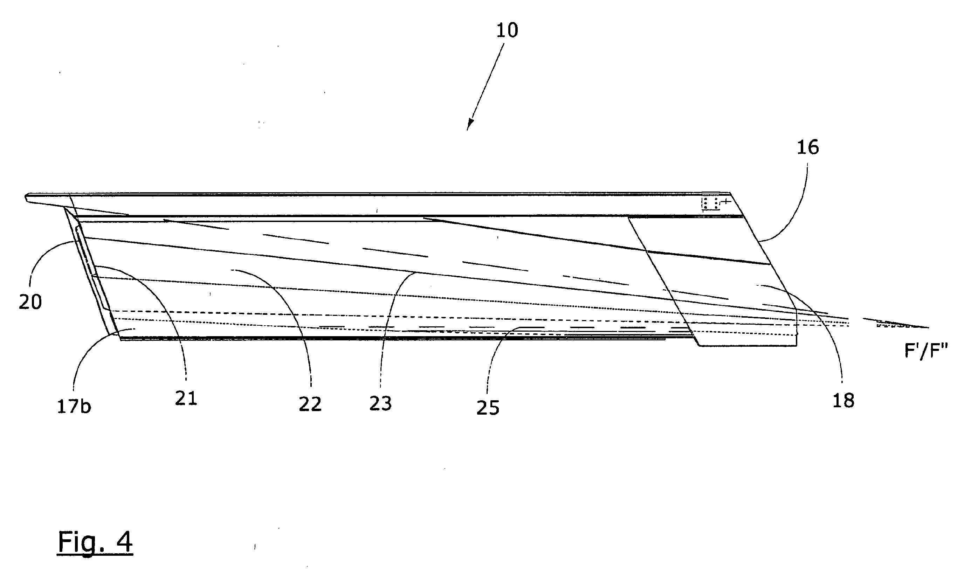

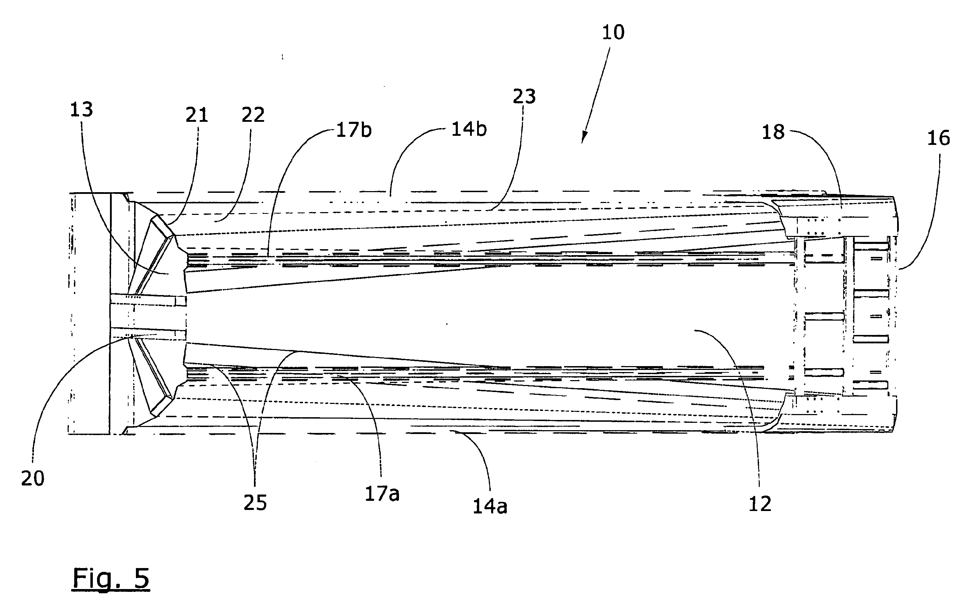

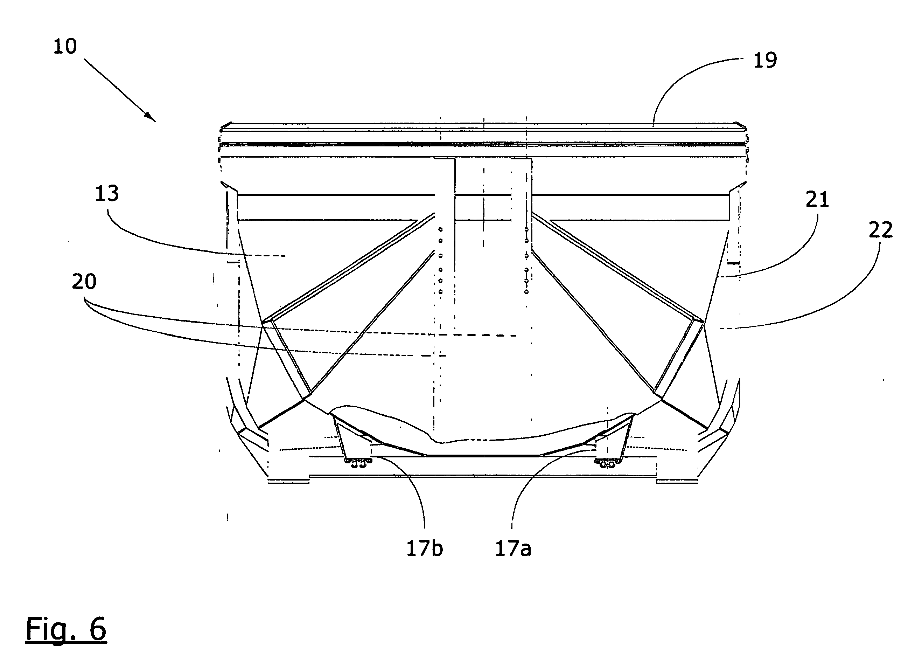

The casing as shown in figures 3 to 6 comprises three distinct longitudinal portions and the front wall 13; in particular the longitudinal portions are represented by the fixed sides 14a, 14b and the base 12 reciprocally joined by means of weld beads 25. The base 12 normally overlaps the sides in the welding zone; embodiments are nevertheless foreseen in which the sides 14 are positioned to cover a small portion of the base 12 in the welding zone.

In addition to the sides 14a, 14b, the base 12 also presents inclined faces connected to the front wall 13 at the vertices of the adjacent broken polygonal segments, and terminating at the rear part of the dump body 10.

The volume of the dump body 10 increases gradually from the front wall 13 towards the rear part close to the swing flap 16 in order to facilitate the detachment of the material especially near the front wall 13 itself when the dump body is raised by means of an appropriate linear actuator fixed to the guides 20 and powered by the vehicle (not shown in the drawings).

The rear part of the base 12 can also present slots for the drainage of any liquid present in the material.

The base or bed 12 of the casing and the front wall 13 can be made from high tensile steel, of appropriate thickness, for example 6 mm, and have load-bearing features, while the fixed sides 14, which are subjected to less stress, can for example be made from high tensile steel which is less thick, for example 4 millimetres.

Alternatively, especially if the dump body 10 is mainly used in relatively corrosive and oxidising environments, the casing 11 can be made from aluminium and with thickness that are on average double those indicated above.

Reducing the distance of the vanishing points F', F" from the rear swing flap 16 of the dump body 10 allows a configuration of the casing 11 appropriate to prevent adhesion of the material without penalising the capacity of the casing 11.

In accordance with the invention, the casing of the dump body 10 is constructed by joining three distinct side elements, in particular the sides 14a, 14b and the base or bed 12.

Unlike the known background art embodiments, the three elements 14a, 14b, 12 have different shapes and, in particular, the original shapes which are subsequently folded to form the dump body 10, are not rectangular. It is in fact theoretically possible to form the dump body by folding, overlapping and joining rectangular metal sheets; it is nevertheless clear that such an embodiment is not appropriate to the aim, since the overlapping areas which would be created are very extensive, with considerable waste of material.

On the other hand, the metal sheets of the dump body according to the invention, which are subsequently folded and joined together, have a substantially trapezoidal shape.

The invention described above refers to a preferred embodiment. It is however clear that the invention is susceptible to numerous variations within the framework of technical equivalents. By way of example, numerous versions of the dump body described above can be foreseen, starting from the basic version illustrated in the drawings.

A reinforced "quarry" version can in fact be foreseen, with components with a greater thickness, or with components made from aluminium, or the dump body can have a greater capacity (achieved by means of higher walls), or as a sealed version in which the rear end is not a swing flap.

## Claims

1. A dump body (10) for heavy vehicles comprising:
- a casing with a base or bed (12) surmounted by a front wall (13) and two sides (14a, 14b) and which can be raised by means of any appropriate linear actuator;
- a rear part (16);
wherein at the front wall, which is concave towards the upper loading part of the dump body (10), said casing presents a cross-section in the shape of a broken polygonal line consisting of at least three segments joined together at an angle
greater than 90°, said cross-section gradually widening from said front wall towards said rear part of the dump body (10), to form a substantially U-shaped cross-section at the rear end, with the sides (14a, 14b) forming an angle of around 90° with the base (12), and wherein
said side (14a, 14b) of said casing comprises faces (22), corresponding to each side of said polygon, presenting longitudinal edges (23) converging on a common vanishing point (F', F"),
**characterised in that**
the vertices, at which adjacent segments of the broken polygonal line are joined together, constitute the respective starting points for a series of fold lines of the sides (14a, 14b) and the base (12) of the dump body (10), these fold lines converge on one side and the other with respect to the longitudinal axis defined by the base (12) of the dump body (10), on a respective pair of theoretical vanishing points (F', F"), geometrically arranged on the same plane at a predetermined finite distance with respect to
the rear end of the dump body (10).

2. A dump body (10) according to claim 1, **characterised in that** said front wall (13), close to the driver's cab of the truck, presents a polygonal configuration, corresponding to the configuration of said cross-section of the dump body (10) itself.

3. A dump body (10) according to any of the previous claims, **characterised in that** said front wall (13) presents external stiffening ribs (20).

4. A dump body (10) according to any of the previous claims, **characterised in that** said casing comprises
a number of longitudinal metal parts joined together by means of welding (25).

5. A dump body (10) according to claim 4, **characterised in that** said longitudinal parts, when flat before being folded, have a substantially trapezoidal shape.

6. A dump body (10) according to any of the previous claims, **characterised in that** the base (12) is self-supporting, preferably made from high tensile steel with a thickness of around 6 mm.

7. A dump body (10) according to any of the previous claims, **characterised in that** the sides (14a, 14b) are made from high tensile steel with a thickness of around 4 mm.

8. A dump body (10) according to any of claims 1 to 5, **characterised in that** said casing is made from aluminium.

## Patentansprüche

1. Kipperaufbau (10) für Schwerfahrzeuge, mit:
- einem Gehäuse mit einer Basis oder einem Bett (12), welches von einer Vorderwand (13) und zwei Seitenwänden (14a, 14b) umgeben ist, und welches durch jeglichen geeigneten Linearstellantrieb angehoben werden kann;
- einer Rückwand (16);
wobei an der Vorderwand, die in Richtung des oberen Ladungsabschnitts des Kipperaufbaus (10) konkav ausgebildet ist, das Gehäuse einen Querschnitt in der Form einer gebrochenen polygonalen Linie zeigt, die aus zumindest drei Segmenten besteht, die unter einem Winkel von größer als 90° zusammenlaufen, wobei sich der Querschnitt graduell von der Vorderseite aus und in Richtung der Rückwand des Kipperaufbaus (10) aufweitet, um einen im Wesentlichen U-förmigen Querschnitt am hinteren Ende auszubilden, wobei die Seiten (14a, 14b) einen Winkel von etwa 90° zur Basis (12) einnehmen, und wobei
die Seiten (14, 14b) des Gehäuses Flächen (22) aufweisen, die jeweils einer Seite des Polygons entsprechen und die Längskanten (23) darstellen, die an einem gemeinsamen Fluchtpunkt (F', F") konvergieren,
**dadurch gekennzeichnet, dass**
die Eckpunkte, an denen benachbarte Segmente der gebrochenen Polygonallinie zusammenlaufen, die jeweiligen Startpunkte für eine Reihe von Faltlinien der Seiten (14a, 14b) und der Basis (12) des Kipperaufbaus (10) ausbilden, wobei diese Faltlinien an der einen Seite und an der anderen Seite mit Bezug zu der Längsachse, die durch die Basis (12) des Kipperaufbaus (10) definiert ist, jeweils an einem Paar von theoretischen Fluchtpunkten (F', F") konvergieren, die geometrisch in der gleichen Ebene in einem vorbestimmten endlichen Abstand angeordnet sind, mit Bezug zu dem hinteren Ende des Kipperaufbaus (10).

2. Kipperaufbau (10) nach Anspruch 1, **dadurch gekennzeichnet, dass** die Vorderwand (13), benachbart der Fahrerkabine des Lastwagens, eine polygonale Konfiguration aufweist, entsprechend der selbigen Konfiguration des Querschnitts des Kipperaufbaus (10).

3. Kipperaufbau (10) nach irgendeinem der vorherigen Ansprüche, **dadurch gekennzeichnet, dass** die Vorderwand (13) externe Versteifungsrippen (20) aufweist.

4. Kipperaufbau (10) nach irgendeinem der vorherigen Ansprüche, **dadurch gekennzeichnet, dass** das Gehäuse eine Anzahl von länglichen Metallteilen umfasst, die mittels Schweißnähten (25) miteinander verbunden sind.

5. Kipperaufbau (10) nach Anspruch 4, **dadurch gekennzeichnet, dass** die länglichen Teile, die vor dem Falten flach sind, eine im Wesentlichen trapezförmige Gestalt aufweisen.

6. Kipperaufbau (10) nach irgendeinem der vorherigen Ansprüche, **dadurch gekennzeichnet, dass** die Basis (12) selbsttragend ausgebildet ist, vorzugsweise aus einem hochzugfesten Stahl mit einer Dicke von etwa 6 mm hergestellt ist.

7. Kipperaufbau (10) nach irgendeinem der vorherigen Ansprüche, **dadurch gekennzeichnet, dass** die Seiten (14a, 14b) aus hochzugfestem Stahl hergestellt sind, mit einer Dicke von etwa 4 mm.

8. Kipperaufbau (10) nach irgendeinem der Ansprüche 1 bis 5, **dadurch gekennzeichnet, dass** das Gehäuse aus Aluminium hergestellt ist.

## Revendications

1. Benne (10) pour véhicules lourds, ladite benne comprenant :
- une caisse qui est dotée d'une base ou d'un plateau (12) surmontée d'une paroi frontale (13) et de deux côtés (14a, 14b) et qui peut être soulevée au moyen de tout actionneur linéaire approprié ;
- une partie arrière (16) ;
dans laquelle, au niveau de la paroi frontale, qui présente une concavité en direction de la partie supérieure de chargement de la benne (10), ladite caisse a une section ayant la forme d'une ligne polygonale brisée constituée d'au moins trois segments raccordés entre eux en formant un angle supérieur à 90°, ladite section s'élargissant progressivement depuis ladite paroi frontale en direction de la ladite partie arrière de la benne (10), pour former une section sensiblement en forme de U à l'extrémité arrière, les côtés (14a, 14b) formant un angle d'environ 90° avec la base (12), et dans laquelle
ledit côté (14a, 14b) de ladite caisse comprend des faces (22), correspondant à chaque côté dudit polygone, présentant des bords longitudinaux (23) qui convergent vers un point de fuite commun (F', F"),
**caractérisée en ce que**
les véhicules, au niveau desquels des segments adjacents de la ligne polygonale brisée sont raccordés ensemble, constituent les points de départ respectifs d'une série de lignes de pliage des côtés (14a, 14b) et de la base (12) de la benne (10), ces lignes de pliage convergent d'un côté et de l'autre par rapport à l'axe longitudinal défini par la base (12) de la benne (10), sur une paire respective de points de fuite théorique (F', F"), disposés géométriquement dans le même plan à une distance définie prédéterminée par rapport à l'extrémité arrière de la benne (10).

2. Benne (10) selon la revendication 1, **caractérisée en ce que** ladite paroi frontale (13), près de la cabine du conducteur du camion, a une configuration polygonale, correspondant à la configuration de ladite section de la benne (10) elle-même.

3. Benne (10) selon l'une quelconque des revendications précédentes, **caractérisée en ce que** ladite paroi frontale (13) possède des nervures de renforcement extérieures (20).

4. Benne (10) selon l'une quelconque des revendications précédentes, **caractérisée en ce que** ladite caisse comprend un nombre de pièces métalliques longitudinales raccordées ensemble par un cordon de soudure (25).

5. Benne (10) selon la revendication 4, **caractérisée en ce que** lesdites pièces longitudinales, lorsqu'elles sont plates avant pliage, ont une forme sensiblement trapézoïdale.

6. Benne (10) selon l'une quelconque des revendications précédentes, **caractérisée en ce que** la base (12) est autoporteuse, fabriquée de préférence à partir d'un acier à résistance très élevée d'une épaisseur d'environ 6 mm.

7. Benne (10) selon l'une quelconque des revendications précédentes, **caractérisée en ce que** les côtés (14a, 14b) sont fabriqués à partir d'un acier à résistance très élevée d'une épaisseur d'environ 4 mm.

8. Benne (10) selon l'une quelconque des revendications 1 à 5, **caractérisée en ce que** ladite caisse est fabriquée à partir d'aluminium.
